# EUROPEAN PATENT SPECIFICATION

(11) **EP 3 670 133 B1**
(45) Date of publication and mention of the grant of the patent: **23.11.2022**
(21) Application number: 19209881.2
(22) Date of filing: 19.11.2019
(51) Int. Cl.: B29C 44/02, B29C 44/04, B29C 44/06, B29C 44/34, B41M 3/00

(54) **MOLDING SHEET, MANUFACTURING METHOD OF MOLDING SHEET, AND MANUFACTURING METHOD OF SHAPED OBJECT**
FORMFOLIE, HERSTELLUNGSVERFAHREN EINER FORMFOLIE UND HERSTELLUNGSVERFAHREN EINES GEFORMTEN GEGENSTANDS
FEUILLE DE MOULAGE, PROCÉDÉ DE FABRICATION DE FEUILLE DE MOULAGE ET PROCÉDÉ DE FABRICATION D'OBJET FORMÉ

(30) Priority: 21.12.2018 JP 2018239100
(43) Date of publication of application: 24.06.2020
(73) Proprietor: Casio Computer Co., Ltd., Tokyo 151-8543 (JP)
(72) Inventor: MOROKUMA, Hiroshi, Tokyo, 205-8555 (JP); MITSUI, Satoshi, Tokyo, 205-8555 (JP); MOTOYANAGI, Yoshimune, Tokyo, 205-8555 (JP); HORIUCHI, Yuji, Tokyo, 205-8555 (JP)
(74) Representative: Plougmann Vingtoft a/s

(56) References cited:
- US-A1- 2018 257 334
- US-A1- 2018 257 415

## Description

The present disclosure relates to a molding sheet, a manufacturing method of the molding sheet, and a manufacturing method of a shaped object.

Technology is known, such as in Examined Japanese Patent Application Publication No. S59-35359, that, after forming an image from a material having high light absorbance on a surface of a thermally expandable sheet including thermally expandable microspheres (thermal expansion material), then manufactures a sheet, that is, a shaped object, forming a three-dimensional image by irradiation of the thermally expandable sheet with light and causing swelling by selective heating of an image portion.

US 2018/257415 A1 discloses discloses a moulding sheet according to the preamble of claim 1, a method according to the preamble of claim 7 and a method according to the preamble of claim 13.

Per the description in Examined Japanese Patent Application Publication No. S59-35359, height of a swollen portion, that is, a convexity, is controlled by a density (or concentration) of the image formed on the surface of the thermally expandable sheet. When the thermally expandable microspheres (thermal expansion material) formed by microencapsulation of a low boiling-point substance with a thermoplastic resin are heated to a temperature higher than a maximum expansion temperature, that is, a temperature at which particle size becomes maximum, the microcapsules shrink relative to the maximum particle size. Therefore, when a difference between a temperature of heating by a dense portion of the image and the maximum expansion temperature of the thermal expansion material is small, the thermal expansion material is heated to a temperature higher than the maximum expansion temperature so that the thermal expansion material shrinks, and such shrinkage may lower the height of the convexity below a desired height.

A high convexity cannot be formed when the image is formed lightly in order to avoid heating the thermal expansion material to a temperature higher than the maximum expansion temperature. However, when a thermally expandable sheet is prepared with a thermal expansion material that has a higher maximum particle size and a higher maximum expansion temperature, an expansion initiation temperature (temperature at which expansion of the thermal expansion material starts), is high, and the range of the density of the image for control of the height of the convexity narrows.

In consideration of the aforementioned circumstances, an objective of the present disclosure is to provide a molding sheet, a manufacturing method of the molding sheet, and a manufacturing method of the shaped object such that height of a convexity of the manufactured shaped object is easily controlled. Moreover, another objective of the present disclosure is to provide a molding sheet, a manufacturing method of the molding sheet, and a manufacturing method of the shaped object that enable increasing height of the convexity of the manufactured shaped object.

In order to achieve the aforementioned objectives, a molding sheet according to a first aspect of the present disclosure includes a base and a thermal expansion layer laminated onto a first main surface of the base. The thermal expansion layer includes a first thermal expansion material and a second thermal expansion material. A maximum expansion temperature of the second thermal expansion material is higher than a maximum expansion temperature of the first thermal expansion material.

In order to achieve the aforementioned objectives, a manufacturing method, of a molding sheet for manufacturing a shaped object by expansion of at least a portion of a thermal expansion layer arranged on one surface of a base, is a manufacturing method including a step of forming the thermal expansion layer on the one surface of the base. The first thermal expansion material and a second thermal expansion material are used in the step of forming the thermal expansion layer. A maximum expansion temperature of the second thermal expansion material is higher than a maximum expansion temperature of the first thermal expansion material.

In order to achieve the aforementioned objectives, a manufacturing method of a shaped object according to a third aspect of the present disclosure is a manufacturing method of a shaped object using a molding sheet including a base and a thermal expansion layer arranged on one surface of the base. The thermal expansion layer includes a first thermal expansion material and a second thermal expansion material. A maximum expansion temperature of the second thermal expansion material is higher than a maximum expansion temperature of the first thermal expansion material. The manufacturing method includes: a step of laminating onto one surface of the molding sheet a thermal conversion layer for conversion of electromagnetic waves into heat, and a step of irradiating the thermal conversion layer with the electromagnetic waves to expand the thermal expansion layer.

A more complete understanding of this application can be obtained when the following detailed description is considered in conjunction with the following drawings, in which:
FIG. 1 is a schematic view illustrating a cross section of a molding sheet according to an embodiment of the present disclosure;
FIG. 2 is a chart illustrating a relationship between particle size and heating temperature of a first thermal expansion material and a second thermal expansion material according to the embodiment of the present disclosure;
FIG. 3 is a flowchart illustrating a manufacturing method of the molding sheet according to the embodiment of the present disclosure;
FIG. 4 is a perspective view of a shaped object according to the embodiment of the present disclosure;
FIG. 5 is a cross-sectional view taken along line A-A of the shaped object illustrated in FIG. 4;
FIG. 6 is a flowchart illustrating a manufacturing method of the shaped object according to the embodiment of the present disclosure;
FIG. 7 is a schematic view illustrating a cross-section of the molding sheet onto which is laminated a thermal conversion layer according to the embodiment of the present disclosure; and
FIG. 8 is a chart illustrating relationships between a density of the thermal conversion layer and heights of a convexity according to an embodiment of the present disclosure and of convexities according to Comparative Examples 1 and 2.

A molding sheet according to an embodiment of the present disclosure is described below with reference to drawings.

A molding sheet 10 of the present embodiment is used in the manufacture of a shaped object 100. The shaped object 100 is used is used for decorative sheeting, wallpaper, or the like. In the present disclosure, the term "shaped object" refers to a sheet that includes unevennesses shaped (formed) on a predetermined surface, and the unevennesses form geometrical shapes, characters, patterns, decorations, or the like. The term "decorations" refers to objects that appeal to the aesthetic sense through visual and/or tactile sensation. The term "shaped (or molded)" refers to the forming of an object that has a shape, and is to be construed to also include concepts such as decoration and ornamentation by forming decorations. Moreover, although the shaped object 100 of the present embodiment is a three-dimensional object that includes unevennesses on a predetermined surface, to distinguish this three-dimensional object from three-dimensional objects formed using a so-called 3D printer, the shaped object 100 of the present embodiment is called a 2.5-dimensional (2.5D) object or a pseudo-three-dimensional (pseudo-3D) object. The technique used to manufacture the shaped object 100 of the present embodiment is called 2.5D printing or pseudo-3D printing.

### Molding sheet

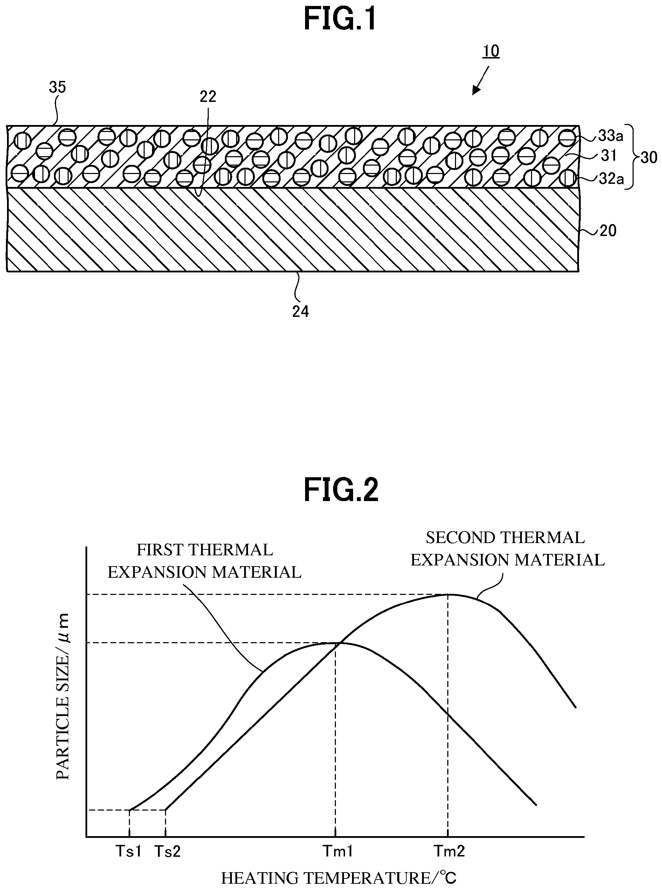

The molding sheet 10 is firstly described with reference to FIGS. 1 to 3. As illustrated in FIG. 1, the molding sheet 10 is provided with a base 20 and a thermal expansion layer 30 laminated onto a first main surface 22 of the base 20. In the present embodiment, the thermal expansion layer 30 is laminated onto the entire surface of the first main surface 22.

The base 20 of the molding sheet 10 has a first main surface 22 onto which the thermal expansion layer 30 is laminated and a second main surface 24 on the side opposite to the first main surface 22. The base 20 supports the thermal expansion layer 30. The base 20 is formed, for example, in a sheet-like shape. Examples of the material of the base 20 include thermoplastic resins such as polyolefin resins (polyethylene (PE), polypropylene (PP), or the like) and polyester resins (polyethylene terephthalate (PET), polybutylene terephthalate (PBT), or the like). The type of material of the base 20 and the thickness of the base 20 are selected according to the intended application of the shaped object 100.

The thermal expansion layer 30 of the molding sheet 10 includes a binder 31, and a first thermal expansion material 32a and a second thermal expansion material 33a dispersed in the binder 31. In the present embodiment, the weight ratio of the binder 31 to the first thermal expansion material 32a to the second thermal expansion material 33a is 2:1:1, that is, the ratio of the weight of the total of the first thermal expansion material 32a and the second thermal expansion material 33a to the weight of the binder 31 is 1:1.

Any thermoplastic resin, such as a vinyl acetate-type polymer or an acrylic-type polymer, may be used as the binder 31. The first thermal expansion material 32a and the second thermal expansion material 33a are thermally expandable microcapsules, for example. The thermally expandable microcapsules are microcapsules that encapsulate a foaming agent including propane, butane, or another low boiling point substance in shells made from a thermoplastic resin. The shells of the thermally expandable microcapsules are formed from a thermoplastic resin such as, for example, polystyrene, polyvinyl chloride, polyvinylidene chloride, polyvinyl acetate, polyacrylic acid ester, polyacrylonitrile, polybutadiene, and copolymers thereof.

As illustrated in FIG. 2, upon heating of the first thermal expansion material 32a to an expansion initiation temperature Ts1 or above, the shell softens, and the foaming agent vaporizes so that the microcapsules expand. When the first thermal expansion material 32a is heated to a temperature greater than or equal to the expansion initiation temperature Ts1 and less than or equal to a maximum expansion temperature Tm1, expansion occurs in a state that has a certain particle size corresponding to the temperature of heating. The expansion initiation temperature Ts1 is the temperature at which the first thermal expansion material 32a starts to expand. The maximum expansion temperature Tm1 is the temperature at which the first thermal expansion material 32a reaches a state in which the particle size is maximum. Upon heating to a temperature higher than the maximum expansion temperature Tm1, after expansion up to the state in which the particle size is maximum, the first thermal expansion material 32a shrinks down to a state in which the particle size corresponds to the temperature of heating. The average particle size of the first thermal expansion material 32a is 10 µm to 18 µm, for example. The expansion initiation temperature Ts1 of the first thermal expansion material 32a is 95°C to 105°C, and the maximum expansion temperature Tm1 is 125°C to 135°C, for example.

Similarly to the first thermal expansion material 32a, upon heating to a temperature greater than or equal to the expansion initiation temperature Ts2 and less than or equal to the maximum expansion temperature Tm2, the second thermal expansion material 33a expands to a state in which the particle size is a certain particle size corresponding to the temperature of heating. Upon heating to a temperature higher than the maximum expansion temperature Tm2, after expansion up to the state in which the particle size is maximum, the second thermal expansion material 33a shrinks down to a state in which the particle size corresponds to the temperature of heating. In the present embodiment, the maximum expansion temperature Tm2 of the second thermal expansion material 33a is higher than the maximum expansion temperature Tm1 of the first thermal expansion material 32a. The expansion initiation temperature Ts2 of the second thermal expansion material 33a is higher than the expansion initiation temperature Ts1 of the first thermal expansion material 32a and is lower than the maximum expansion temperature Tm1 of the first thermal expansion material 32a. Specifically, the average particle size of the second thermal expansion material 33a is 12 µm to 18 µm, for example. The expansion initiation temperature Ts2 of the second thermal expansion material 33a is 105°C to 115°C, and the maximum expansion temperature Tm2 is 145°C to 155°C, for example. Moreover, the maximum particle size of the second thermal expansion material 33a is larger than the maximum particle size of the first thermal expansion material 32a.

The thermal expansion layer 30 of the molding sheet 10 expands due to expansion of the first thermal expansion material 32a and the second thermal expansion material 33a. Due to expansion of the thermal expansion layer 30, a below-described convexity 110 is formed on a surface 35 that is at the side opposite to the base 20 side.

### Manufacturing Method of Molding sheet

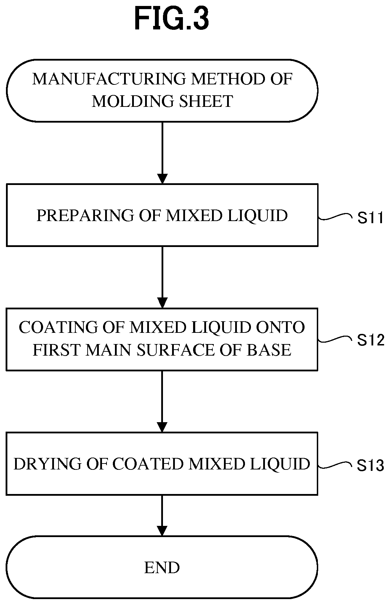

FIG. 3 is a flowchart illustrating the manufacturing method of the molding sheet 10. The manufacturing method of the molding sheet 10 includes a mixing step of preparing a mixed liquid for forming the thermal expansion layer 30 (step S11), a coating step of coating the prepared mixed liquid onto the first main surface 22 of the base 20 (step S12), and a drying step of drying the coated mixed liquid (step S13).

In the mixing step (step S11), the base 20, the binder 31, the first thermal expansion material 32a, and the second thermal expansion material 33a are prepared. Thereafter, the mixed liquid for forming the thermal expansion layer 30 is formed by mixing together of the binder 31, the first thermal expansion material 32a, and the second thermal expansion material 33a.

In the coating step (step S12), a coating device is used to coat the prepared mixed liquid onto the first main surface 22 of the base 20. The coating device is a device such as a bar coater, a roll coater, a spray coater, or the like.

In the drying step (step S13), the mixed liquid coated upon the first main surface 22 of the base 20 is dried. Due to such operation, the thermal expansion layer 30 is formed on the first main surface 22 of the base 20. The molding sheet 10 is manufactured in the above-described manner. The coating step (step S12) and the drying step (step S13) may be repeatedly performed in order to obtain a prescribed thickness of the thermal expansion layer 30.

### Shaped Object

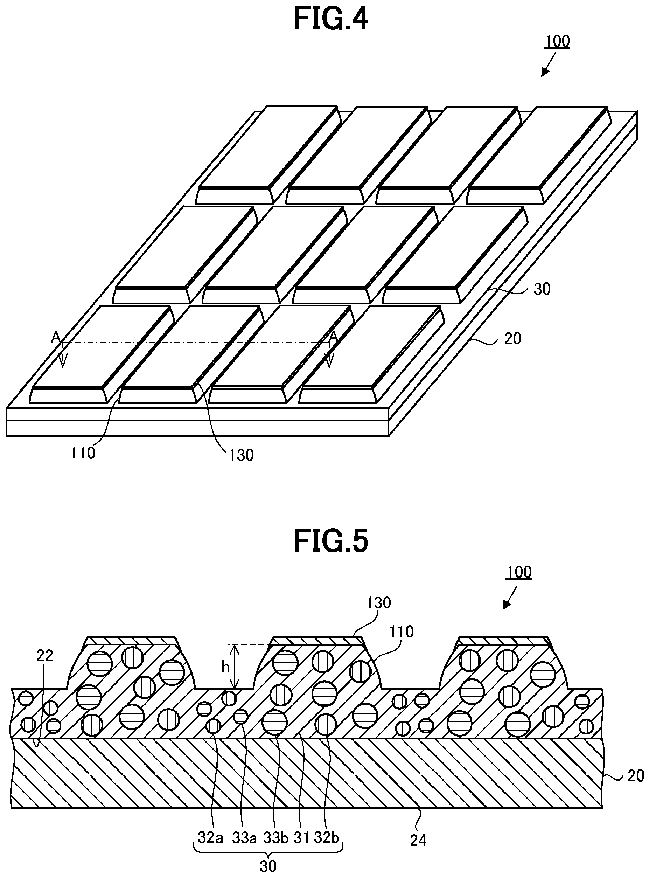

Manufacture of the shaped object 100 from the molding sheet 10 is described next with reference to FIGS. 4 to 7. As illustrated in FIGS. 4 and 5, the shaped object 100 includes the base 20, the thermal expansion layer 30 laminated onto the first main surface 22 of the base 20 and having the convexity 110 on the side opposite to the base 20, and the thermal conversion layer 130 laminated in a pattern corresponding to the convexity 110.

The shaped object 100 is a sheet-like shaped object. The shaped object 100 has unevenness due to the convexity 110 on the surface. The configuration of the base 20 of the shaped object 100 is similar to configuration of the base 20 of the molding sheet 10, and thus the thermal expansion layer 30 and the thermal conversion layer 130 of the shaped object 100 are described below.

As illustrated in FIG. 5, the thermal expansion layer 30 of the shaped object 100 includes the binder 31, the first thermal expansion material 32a, the second thermal expansion material 33a, an expanded first thermal expansion material 32b that is the first thermal expansion material 32a after completion of expansion, and an expanded second thermal expansion material 33b that is the second thermal expansion material 33a after completion of expansion. The convexity 110 of the thermal expansion layer 30 includes the binder 31, the expanded first thermal expansion material 32b and the expanded second thermal expansion material 33b.

A thermal conversion layer 130 of the shaped object 100 includes a thermal conversion material. The thermal conversion layer 130 is provided in order to form the convexity 110 on the thermal expansion layer 30. The thermal conversion layer 130 is laminated onto the thermal expansion layer 30 in a pattern corresponding to the convexity 110. The thermal conversion layer 130 converts irradiated electromagnetic waves to heat and releases the converted heat. Such operation heats the thermal expansion layer 30 of the molding sheet 10, expands the first thermal expansion material 32a and the second thermal expansion material 33a, and forms the convexity 110 on the thermal expansion layer 30. The height h of the formed convexity 110 depends on a heat amount, that is, thermal energy, imparted to the thermal expansion layer 30, that is, the first thermal expansion material 32a and the second thermal expansion material 33a. In the present embodiment as described below, the height h of the convexity 110 is controlled by control of the heat amount imparted to the thermal expansion layer 30 in accordance with a density of the thermal conversion layer 130.

The thermal conversion material included in the thermal conversion layer 130 converts the absorbed electromagnetic waves to heat. Examples of the thermal conversion material include carbon black, metal hexaboride compounds, and tungsten oxide compounds. Carbon black, for example, absorbs and converts visible light, infrared light, or the like to heat. Metal hexaboride compounds and tungsten oxide compounds absorb and convert near-infrared light to heat. Among the metal hexaboride compounds and the tungsten oxide compounds, lanthanum hexaboride (LaB₆) and cesium tungsten oxide are preferably used from the perspectives of obtaining high light absorptivity in the near-infrared region and high transmittance in the visible light spectrum.

### Manufacturing Method of Shaped Object

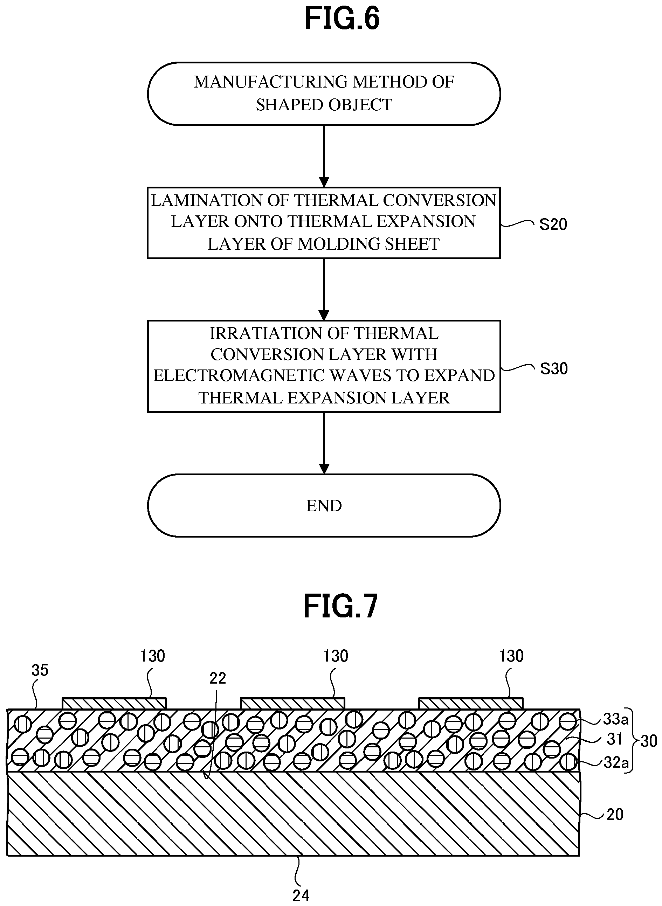

The manufacturing method of the shaped object 100 is described next with reference to FIGS. 6 and 7. In the present embodiment, the shaped object 100 is manufactured from the molding sheet 10 that is sheet-like, such as an A4 paper-sized sheet. The shaped object 100 is manufactured by expansion of at least a portion of the thermal expansion layer 30 of the molding sheet 10.

FIG. 6 is a flowchart illustrating the manufacturing method of the shaped object 100. The manufacturing method of the shaped object 100 includes a thermal conversion layer laminating step of laminating the thermal conversion layer 130 onto the thermal expansion layer 30 of the molding sheet 10 (step S20), and an expansion step of irradiating the thermal conversion layer 130 with the electromagnetic waves to cause expansion of the thermal expansion layer 30 (step S30).

In the thermal conversion layer laminating step (step S20), a printing device prints an ink including the thermal conversion material onto the thermal expansion layer 30 of the molding sheet 10 in a pattern corresponding to the convexity 110. Due to such operation, as illustrated in FIG. 7, the thermal conversion layer 130 is laminated onto the thermal expansion layer 30 of the molding sheet 10. The printing device is an inkjet printer, for example.

In the expansion step (step S30), the thermal conversion layer 130 is irradiated with the electromagnetic waves having a prescribed energy, while moving at a prescribed speed at least one of the molding sheet 10 onto which the thermal conversion layer 130 is laminated or a non-illustrated irradiation unit for irradiating the thermal conversion layer 130 with the electromagnetic waves. The thermal conversion layer 130 converts the irradiated electromagnetic waves to heat and releases the converted heat. In the present embodiment, the first thermal expansion material 32a and the second thermal expansion material 33a expand due to the heat released from the thermal conversion layer 130 to form the expanded first thermal expansion material 32b and the expanded second thermal expansion material 33b. Due to such operation, the thermal expansion layer 30 expands and thus forms the convexity 110. The shaped object 100 can be manufactured by the above-described operation.

### Height of Convexity

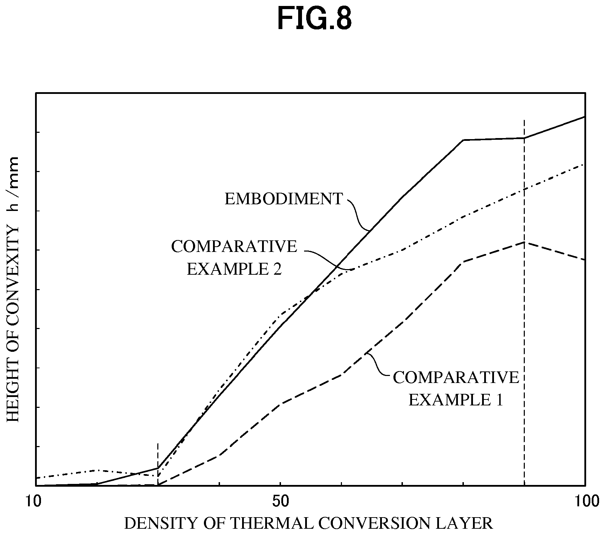

Here, the height h of the convexity 110 of the thermal expansion layer 30 and the density of the thermal conversion layer 130 are described with reference to FIG. 8.

FIG. 8 illustrates relationships between the density of the thermal conversion layer 130 and the height h of the convexity 110 of the shaped object 100 manufactured from the molding sheet 10 of an embodiment and a height h of the convexity of a shaped object manufactured from a molding sheet of Comparative Examples 1 and 2. A thermal expansion layer of the molding sheet of Comparative Example 1 includes the binder 31 and the first thermal expansion material 32a at a weight ratio of 1:1. A thermal expansion layer of the molding sheet of Comparative Example 2 includes the binder 31 and the second thermal expansion material 33a at a weight ratio of 1:1. Thus in the thermal expansion layer 30 of the molding sheet 10 and thermal expansion layers of the Comparative Examples 1 and 2, the binder 31 and the thermal expansion material are mixed in equal portions (1:1), that is, equal sum of the weight amounts of the first thermal expansion material 32a and the second thermal expansion material 33a, weight amount of the first thermal expansion material 32a, or weight amount of the second thermal expansion material 33a. The other content of the molding sheets of Comparative Examples 1 and 2 and the manufacturing method of the shaped object for manufacturing from the molding sheets of Comparative Examples 1 and 2 are similar to the molding sheet 10 and the manufacturing method of the shaped object 100 of the present embodiment.

Moreover, the density of the thermal conversion layer 130 is controlled by a dot density, that is, by the density of the thermal conversion material, printed in the thermal conversion layer laminating step (step S20). In the present embodiment, the density occurring in the state in which the thermal conversion layer 130 is printed at a maximum dot density is taken to be a density value of the thermal conversion layer equal to "100". In the expansion step (step S30), due to irradiation of the thermal conversion layer 130 with the electromagnetic waves having a prescribed (fixed) energy, the density of the thermal conversion layer 130 is proportional to the heat amount imparted to the thermal expansion layer 30.

As illustrated in FIG. 8, the height h of the convexity 110 of the molding sheet 10 of the present embodiment increases with increased density of the thermal conversion layer 130. Moreover, the height h of the convexity 110 of the molding sheet 10 of the present embodiment does not decrease even in the dense region of the density of the thermal conversion layer 130, that is, at density values greater than or equal to "90". For the molding sheet 10 of the present embodiment, even though the expanded first thermal expansion material 32b shrinks, the second thermal expansion material 33a having the maximum expansion temperature Tm2 that is higher than the maximum expansion temperature Tm1 of the first thermal expansion material 32a expands to form the expanded second thermal expansion material 33b. Even in the region of dense values of the density of the thermal conversion layer 130, the molding sheet 10 of the present embodiment can increase the height h of the convexity 110 with increase in the density of the thermal conversion layer 130. The density of the thermal conversion layer 130 is proportional to the heat amount imparted to the thermal expansion layer 30, and thus even in the region in which a large heat amount is imparted to the thermal expansion layer 30, the molding sheet 10 can control the height h of the convexity 110. However, as illustrated in FIG. 8, due to contraction of the expanded first thermal expansion material 32b, the height h of the convexity 110 of the Comparative Example 1 decreases in the dense region of the density of the thermal conversion layer 130, that is, at densities greater than or equal to 90. Therefore, the molding sheet of Comparative Example 1 is unable to control the height h of the convexity 110 in the region in which a high heat amount is imparted to the thermal expansion layer 30.

As illustrated in FIG. 8, the density at which the height h of the convexity 110 of the molding sheet 10 of the example of the present embodiment starts to become higher decreases in comparison to the Comparative Examples 1 and 2 (in the vicinity of "20" for the molding sheet 10, and "30" for the Comparative Examples 1 and 2). Therefore, the molding sheet 10 of the present embodiment can control the height h of the convexity 110 even in the region of light density of the thermal conversion layer 130, that is, the region in which a small heat amount is imparted to the thermal expansion layer 30. The molding sheet 10 of the present embodiment is assumed be able to control the height h of the convexity 110 in the region in which the low heat amount is imparted to the thermal expansion layer 30 because the fraction, occupied by the first thermal expansion material 32a having the low expansion initiation temperature Ts1 in the thermal expansion layer 30 of the molding sheet 10 of the present embodiment, is small, and the heat amount consumed by the expansion of the first thermal expansion material 32a that initially starts expansion decreases.

Furthermore, the maximum value of height of the convexity 110 is larger for the molding sheet 10 of the present embodiment in comparison to the Comparative Examples 1 and 2. Therefore, the molding sheet 10 can increase the height h of the convexity 110.

In the aforementioned manner, due to the thermal expansion layer 30 including the first thermal expansion material 32a having the maximum expansion temperature Tm1 and the second thermal expansion material 33a having the maximum expansion temperature Tm2 that is higher than the maximum expansion temperature Tm1, the molding sheet 10 can control the height h of the convexity 110 in the region in which the heat amount imparted to the thermal expansion layer 30 is high. The molding sheet 10 can control the height h of the convexity 110 even in the region in which a low heat amount is imparted to the thermal expansion layer 30. Therefore, for a wider range of the heat amount imparted to the thermal expansion layer 30, the molding sheet 10 can control the height h of the convexity 110 and can easily control the height h of the convexity 110. Further, the molding sheet 10 can further increase the height h of the convexity 110.

Moreover, as illustrated in FIG. 8, the increase in the height h of the convexity 110 is gentler at densities of the thermal conversion layer 130 greater than or equal to "80". Therefore, in the case of manufacturing the shaped object 100 having a high convexity 110 from the molding sheet 10, the shaped object 100 can be manufactured that has little change in the height h of the convexity 110 due to temperature of use.

### Modified Examples

Although embodiments of the present disclosure are described above, various types of modifications are possible for the present disclosure within a scope that does not depart from the gist of the present disclosure.

For example, the shaped object 100 may be manufactured in a roll shape from a roll-like molding sheet 10.

The material included in the base 20 is not limited to thermoplastic resins. The material included in the base 20 may be paper, fabric, or the like. The thermoplastic resin included in the base 20 is not limited to polyolefin resins and polyester resins. The thermoplastic resin included in the base 20 may be a polyamide resin, a polyvinyl chloride (PVC) resin, a polyimide resin, or the like.

The ratio of the total of the weight amounts of the first thermal expansion material 32a and the second thermal expansion material 33a to the weight amount of the binder 31 is not limited to 1:1. From the standpoint of stability of the shape of the convexity 110, the ratio of the total of the weight amounts of the first thermal expansion material 32a and the second thermal expansion material 33a to the weight amount of the binder 31 is preferably 9:1 to 1:1. Moreover, the weight ratio of the first thermal expansion material 32a to the second thermal expansion material 33a is not limited to 1:1. The weight ratio of the first thermal expansion material 32a to the second thermal expansion material 33a is preferably 0.2 to 4, inclusive. In the case in which the weight ratio of the second thermal expansion material 33a is less than 0.2, the settling of the convexity 110 due to shrinkage of the expanded first thermal expansion material 32b becomes greater than the swelling of the convexity 110 due to expansion of the second thermal expansion material 33a, and the height h of the convexity 110 decreases. Moreover, in the case in which the weight ratio of the second thermal expansion material 33a is larger than 4, the heat amount for starting to increase the height h of the convexity 110 increases, and the range of the heat amount for controlling the height h of the convexity 110 narrows.

Moreover, the expansion initiation temperature Ts2 of the second thermal expansion material 33a is preferably lower than the maximum expansion temperature Tm1. When the expansion initiation temperature Ts2 of the second thermal expansion material 33a is higher than the maximum expansion temperature Tm1 of the first thermal expansion material 32a, the settling of the convexity 110 due to shrinkage of the expanded first thermal expansion material 32b is greater than the swelling of the convexity 110 due to expansion of the second thermal expansion material 33a, and the height h of the convexity 110 tends to decrease. Although the maximum particle size of the second thermal expansion material 33a may be smaller than the maximum particle size of the first thermal expansion material 32a, in order to suppress the settling of the convexity 110 due to shrinkage of the expanded first thermal expansion material 32b, the maximum particle size of the second thermal expansion material 33a is preferably larger than the maximum particle size of the expanded first thermal expansion material 32b.

In addition to the first thermal expansion material 32a and the second thermal expansion material 33a, the thermal expansion layer 30 may include one additional other thermal expansion material, or may include a plurality of such other thermal expansion materials. For example, the thermal expansion layer 30 may include a thermal expansion material that has a maximum expansion temperature higher than the maximum expansion temperature Tm2 of the second thermal expansion material 33a, and has an expansion initiation temperature higher than the expansion initiation temperature Ts2 of the second thermal expansion material 33a and lower than the maximum expansion temperature Tm2.

In the embodiments, the thermal conversion layer 130 is laminated onto the thermal expansion layer 30. The thermal conversion layer 130 may be laminated onto the second main surface 24 of the base 20. Moreover, the thermal conversion layer 130 may be laminated to a release layer provided upon the thermal expansion layer 30. Due to such configuration, the release layer can be pealed away from the shaped object 100, and the thermal conversion layer 130 can be removed from the shaped object 100.

Another layer of a freely-selected material may be formed between each layer of the molding sheet 10 and the shaped object 100. For example, an adhesive layer may be formed, between the base 20 and the thermal expansion layer 30, for greater adhesion between the base 20 and the thermal expansion layer 30. The adhesive layer includes a surface modifier, for example.

Moreover, a color image may be printed onto the shaped object 100. For example, a color ink layer representing the color image and including the four colors of cyan, magenta, yellow, and black may be laminated onto the thermal expansion layer 30 of the shaped object 100.

The printing device for printing the thermal conversion layer 130 is not limited to an inkjet printer. For example, the printing device may be a laser printer.

The method of manufacture of the shaped object 100 from the molding sheet 10 is not limited to the manufacturing method of the embodiments. For example, the convexity 110 may be formed by heating the thermal expansion layer 30 by irradiating the molding sheet 10 with laser light or with irradiation light from an infrared lamp. Moreover, the convexity 110 may be formed by heating the thermal expansion layer 30 by a thermal print head on which are arrayed electrical heaters or heating resistor elements. In such manufacturing methods, the thermal conversion layer 130 is not laminated onto the molding sheet 10.

The foregoing describes some example embodiments for explanatory purposes. Although the foregoing discussion has presented specific embodiments, persons skilled in the art will recognize that changes may be made in form and detail without departing from the scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A molding sheet (10) for manufacturing a shaped object by swelling of at least a portion of a thermal expansion layer (30) arranged on one surface of a base (20), the molding sheet (10) comprising:
the base (20); and
the thermal expansion layer (30) laminated onto a first main surface of the base (20), wherein
the thermal expansion layer (30) comprises a first thermal expansion material (32a) and a second thermal expansion material (33a), **characterized in that** the first thermal expansion material (32a) and the second thermal expansion material (33a) are dispersed in a binder (31) and **in that**
a maximum expansion temperature (Tm2) of the second thermal expansion material (33a) is higher than a maximum expansion temperature (Tml) of the first thermal expansion material (32a), and
an expansion initiation temperature (Ts2) of the second thermal expansion material (33a) is higher than an expansion initiation temperature (Ts1) of the first thermal expansion material (32a).

2. The molding sheet (10) according to claim 1, wherein
an expansion initiation temperature (Ts2) of the second thermal expansion material (33a) is lower than the maximum expansion temperature (Tml) of the first thermal expansion material (32a).

3. The molding sheet (10) according to claim 1 or 2, wherein
a maximum particle size of the second thermal expansion material (33a) is larger than a maximum particle size of the first thermal expansion material (32a).

4. The molding sheet (10) according to any one of claims 1 to 3, wherein
a weight ratio of the second thermal expansion material (33a) to the first thermal expansion material (32a) is 0.2 to 4, inclusive.

5. The molding sheet (10) according to any one of claims 1 to 4, wherein
a ratio of a total of weight amounts of the first thermal expansion material (32a) and the second thermal expansion material (33a) to a weight amount of the binder (31) is 9:1 to 1:1.

6. The molding sheet (10) according to any one of claims 1 to 4, wherein
a weight ratio of the binder (31) to the first thermal expansion material (32a) to the second thermal expansion material (33a) is 2:1:1.

7. A manufacturing method of manufacturing a molding sheet (10) for manufacturing a shaped object (100) by expansion of at least a portion of a thermal expansion layer (30) arranged on one surface of a base (20), the manufacturing method comprising:
a step of forming the thermal expansion layer (30) on the one surface of the base (20), **characterized in that**
the thermal expansion layer (30) is formed by applying on the base (20) a mixed liquid in which a first thermal expansion material (32a) and a second thermal expansion material (33a) are dispersed in a binder (31) in the step of forming the thermal expansion layer (30),
a maximum expansion temperature (Tm2) of the second thermal expansion material (33a) is higher than a maximum expansion temperature (Tml) of the first thermal expansion material (32a), and
an expansion initiation temperature (Ts2) of the second thermal expansion material (33a) is higher than an expansion initiation temperature (Ts1) of the first thermal expansion material (32a).

8. The manufacturing method according to claim 7, wherein
an expansion initiation temperature (Ts2) of the second thermal expansion material (33a) is lower than the maximum expansion temperature (Tml) of the first thermal expansion material (32a).

9. The manufacturing method according to claim 7 or 8, wherein
a maximum particle size of the second thermal expansion material (33a) is larger than a maximum particle size of the first thermal expansion material (32a).

10. The manufacturing method according to any one of claims 7 to 9, wherein
a weight ratio of the second thermal expansion material (33a) to the first thermal expansion material (32a) is 0.2 to 4, inclusive.

11. The manufacturing method according to any one of claims 7 to 10, wherein
a ratio of a total of weight amounts of the first thermal expansion material (32a) and the second thermal expansion material (33a) to a weight amount of the binder (31) is 9:1 to 1:1.

12. The manufacturing method according to any one of claims 7 to 11, wherein a weight ratio of the binder (31) to the first thermal expansion material (32a) to the second thermal expansion material (33a) is 2:1:1.

13. A manufacturing method of manufacturing a shaped object (100) using a molding sheet (10) including a base (20) and a thermal expansion layer (30) arranged on one surface of the base (20), the manufacturing method comprising:
a step (S20) of laminating onto one surface of the molding sheet (10) a thermal conversion layer (130) for conversion of electromagnetic waves into heat, and
a step (S30) of irradiating the thermal conversion layer (130) with the electromagnetic waves to expand the thermal expansion layer 30, **characterized in that**
the thermal expansion layer (30) comprises a first thermal expansion material (32a) and a second thermal expansion material (33a) that are dispersed in a binder (31),
a maximum expansion temperature (Tm2) of the second thermal expansion material (33a) is higher than a maximum expansion temperature (Tml) of the first thermal expansion material (32a), and
an expansion initiation temperature (Ts2) of the second thermal expansion material (33a) is higher than an expansion initiation temperature (Ts1) of the first thermal expansion material (32a).

14. The manufacturing method according to claim 13, wherein
an expansion initiation temperature (Ts2) of the second thermal expansion material (33a) is lower than the maximum expansion temperature (Tml) of the first thermal expansion material (32a).

15. The manufacturing method according to claim 13 or 14, wherein
a maximum particle size of the second thermal expansion material (33a) is greater than a maximum particle size of the first thermal expansion material (32a).

## Patentansprüche

1. Formfolie (10) zur Herstellung eines geformten Gegenstandes durch Aufquellen von mindestens einem Teil einer auf einer Oberfläche einer Basis (20) angeordneten Wärmeausdehnungsschicht (30), wobei die Formfolie (10) umfasst:
die Basis (20); und
die Wärmeausdehnungsschicht (30), die auf eine erste Hauptoberfläche der Basis (20) laminiert ist, wobei
die Wärmeausdehnungsschicht (30) ein erstes Wärmeausdehnungsmaterial (32a) und ein zweites Wärmeausdehnungsmaterial (33a) umfasst, **dadurch gekennzeichnet, dass** das erste Wärmeausdehnungsmaterial (32a) und das zweite Wärmeausdehnungsmaterial (33a) in einem Bindemittel (31) dispergiert sind, und dass
eine maximale Ausdehnungstemperatur (Tm2) des zweiten Wärmeausdehnungsmaterials (33a) höher ist als eine maximale Ausdehnungstemperatur (Tml) des ersten Wärmeausdehnungsmaterials (32a), und
eine Ausdehnungsbeginntemperatur (Ts2) des zweiten Wärmeausdehnungsmaterials (33a) höher ist als eine Ausdehnungsbeginntemperatur (Ts1) des ersten Wärmeausdehnungsmaterials (32a).

2. Formfolie (10) nach Anspruch 1, wobei
eine Ausdehnungsbeginntemperatur (Ts2) des zweiten Wärmeausdehnungsmaterials (33a) niedriger ist als die maximale Ausdehnungstemperatur (Tml) des ersten Wärmeausdehnungsmaterials (32a).

3. Formfolie (10) nach Anspruch 1 oder 2, wobei
eine maximale Teilchengröße des zweiten Wärmeausdehnungsmaterials (33a) größer ist als eine maximale Teilchengröße des ersten Wärmeausdehnungsmaterials (32a).

4. Formfolie (10) nach einem der Ansprüche 1 bis 3, wobei
ein Gewichtsverhältnis des zweiten Wärmeausdehnungsmaterials (33a) zu dem ersten Wärmeausdehnungsmaterial (32a) 0,2 bis einschließlich 4 beträgt.

5. Formfolie (10) nach einem der Ansprüche 1 bis 4, wobei
ein Verhältnis der Gesamtgewichtsmenge des ersten Wärmeausdehnungsmaterials (32a) und des zweiten Wärmeausdehnungsmaterials (33a) zu der Gewichtsmenge des Bindemittels (31) 9:1 bis 1:1 beträgt.

6. Formfolie (10) nach einem der Ansprüche 1 bis 4, wobei
ein Gewichtsverhältnis des Bindemittels (31) zu dem ersten Wärmeausdehnungsmaterial (32a) zu dem zweiten Wärmeausdehnungsmaterial (33a) 2:1:1 beträgt.

7. Herstellungsverfahren zur Herstellung einer Formfolie (10) zur Herstellung eines geformten Gegenstandes (100) durch Ausdehnung von mindestens einem Teil einer Wärmeausdehnungsschicht (30), die auf einer Oberfläche einer Basis (20) angeordnet ist, wobei das Herstellungsverfahren umfasst:
einen Schritt des Bildens der Wärmeausdehnungsschicht (30) auf der einen Oberfläche der Basis (20), **dadurch gekennzeichnet, dass**
die Wärmeausdehnungsschicht (30) durch Aufbringen einer gemischten Flüssigkeit, in der ein erstes Wärmeausdehnungsmaterial (32a) und ein zweites Wärmeausdehnungsmaterial (33a) in einem Bindemittel (31) dispergiert sind, auf die Basis (20) in dem Schritt der Bildung der Wärmeausdehnungsschicht (30) gebildet wird,
eine maximale Ausdehnungstemperatur (Tm2) des zweiten Wärmeausdehnungsmaterials (33a) höher ist als eine maximale Ausdehnungstemperatur (Tml) des ersten Wärmeausdehnungsmaterials (32a), und
eine Ausdehnungsbeginntemperatur (Ts2) des zweiten Wärmeausdehnungsmaterials (33a) höher ist als eine Ausdehnungsbeginntemperatur (Ts1) des ersten Wärmeausdehnungsmaterials (32a).

8. Herstellungsverfahren nach Anspruch 7, wobei
eine Ausdehnungsbeginntemperatur (Ts2) des zweiten Wärmeausdehnungsmaterials (33a) niedriger ist als die maximale Ausdehnungstemperatur (Tml) des ersten Wärmeausdehnungsmaterials (32a).

9. Herstellungsverfahren nach Anspruch 7 oder 8, wobei
eine maximale Teilchengröße des zweiten Wärmeausdehnungsmaterials (33a) größer ist als eine maximale Teilchengröße des ersten Wärmeausdehnungsmaterials (32a).

10. Herstellungsverfahren nach einem der Ansprüche 7 bis 9, wobei
ein Gewichtsverhältnis des zweiten Wärmeausdehnungsmaterials (33a) zu dem ersten Wärmeausdehnungsmaterial (32a) 0,2 bis einschließlich 4 beträgt.

11. Herstellungsverfahren nach einem der Ansprüche 7 bis 10, wobei
ein Verhältnis der Gesamtgewichtsmenge des ersten Wärmeausdehnungsmaterials (32a) und des zweiten Wärmeausdehnungsmaterials (33a) zu einer Gewichtsmenge des Bindemittels (31) 9:1 bis 1:1 beträgt.

12. Herstellungsverfahren nach einem der Ansprüche 7 bis 11, wobei
ein Gewichtsverhältnis des Bindemittels (31) zu dem ersten Wärmeausdehnungsmaterial (32a) zu dem zweiten Wärmeausdehnungsmaterial (33a) 2:1:1 beträgt.

13. Herstellungsverfahren zur Herstellung eines geformten Gegenstandes (100) unter Verwendung einer Formfolie (10), die eine Basis (20) und eine auf einer Oberfläche der Basis (20) angeordnete Wärmeausdehnungsschicht (30) aufweist, wobei das Herstellungsverfahren umfasst:
einen Schritt (S20) des Laminierens einer Wärmeumwandlungsschicht (130) zur Umwandlung von elektromagnetischen Wellen in Wärme auf eine Oberfläche der Formfolie (10), und
einen Schritt (S30) des Bestrahlens der Wärmeumwandlungsschicht (130) mit den elektromagnetischen Wellen, um die Wärmeausdehnungsschicht (30) auszudehnen, **dadurch gekennzeichnet, dass**
die Wärmeausdehnungsschicht (30) ein erstes Wärmeausdehnungsmaterial (32a) und ein zweites Wärmeausdehnungsmaterial (33a) umfasst, die in einem Bindemittel (31) dispergiert sind,
eine maximale Ausdehnungstemperatur (Tm2) des zweiten Wärmeausdehnungsmaterials (33a) höher ist als eine maximale Ausdehnungstemperatur (Tml) des ersten Wärmeausdehnungsmaterials (32a), und
eine Ausdehnungsbeginntemperatur (Ts2) des zweiten Wärmeausdehnungsmaterials (33a) höher ist als eine Ausdehnungsbeginntemperatur (Ts1) des ersten Wärmeausdehnungsmaterials (32a).

14. Herstellungsverfahren nach Anspruch 13, wobei
eine Ausdehnungsbeginntemperatur (Ts2) des zweiten Wärmeausdehnungsmaterials (33a) niedriger ist als die maximale Ausdehnungstemperatur (Tml) des ersten Wärmeausdehnungsmaterials (32a).

15. Herstellungsverfahren nach Anspruch 13 oder 14, wobei
eine maximale Teilchengröße des zweiten Wärmeausdehnungsmaterials (33a) größer ist als eine maximale Teilchengröße des ersten Wärmeausdehnungsmaterials (32a).

## Revendications

1. Feuille de moulage (10) destinée à la fabrication d'un objet formé, par gonflement d'au moins une partie d'une couche à dilatation thermique (30) disposée sur une surface d'une base (20), la feuille de moulage (10) comprenant :
la base (20) ; et
la couche à dilatation thermique (30) appliquée sur une première surface principale de la base (20), dans laquelle
la couche à dilatation thermique (30) comprend un premier matériau à dilatation thermique (32a) et un second matériau à dilatation thermique (33a), **caractérisée en ce que** le premier matériau à dilatation thermique (32a) et le second matériau à dilatation thermique (33a) sont dispersés dans un liant (31) et **en ce que**
une température de dilatation maximale (Tm2) du second matériau à dilatation thermique (33a) est plus élevée qu'une température de dilatation maximale (Tml) du premier matériau à dilatation thermique (32a), et
une température initiale de dilatation (Ts2) du second matériau à dilatation thermique (33a) est plus élevée qu'une température initiale de dilatation (Ts1) du premier matériau à dilatation thermique (32a).

2. Feuille de moulage (10) selon la revendication 1, dans laquelle
une température initiale de dilatation (Ts2) du second matériau à dilatation thermique (33a) est plus basse que la température de dilatation maximale (Tml) du premier matériau à dilatation thermique (32a).

3. Feuille de moulage (10) selon la revendication 1 ou 2, dans laquelle
une taille maximale de particule du second matériau à dilatation thermique (33a) est supérieure à une taille maximale de particule du premier matériau à dilatation thermique (32a).

4. Feuille de moulage (10) selon l'une quelconque des revendications 1 à 3, dans laquelle
un rapport pondéral du second matériau à dilatation thermique (33a) au premier matériau à dilatation thermique (32a) vaut de 0,2 à 4, limites incluses.

5. Feuille de moulage (10) selon l'une quelconque des revendications 1 à 4, dans laquelle
un rapport d'un total de quantités pondérales du premier matériau à dilatation thermique (32a) et du second matériau à dilatation thermique (33a) à une quantité pondérale du liant (31) vaut de 9:1 à 1:1.

6. Feuille de moulage(10) selon l'une quelconque des revendications 1 à 4, dans laquelle
un rapport pondéral du liant (31) au premier matériau à dilatation thermique (32a) au second matériau à dilatation thermique (33a) est 2:1:1.

7. Procédé de fabrication destiné à la fabrication d'une feuille de moulage (10) destinée à la fabrication d'un objet formé (100), par dilatation d'au moins une partie d'une couche à dilatation thermique (30) disposée sur une surface d'une base (20), le procédé de fabrication comprenant :
une étape de formation de la couche à dilatation thermique (30) sur ladite une surface de la base (20), **caractérisé en ce que**
la couche à dilatation thermique (30) est formée par application sur la base (20) d'un liquide mélangé dans lequel un premier matériau à dilatation thermique (32a) et un second matériau à dilatation thermique (33a) sont dispersés dans un liant (31) dans l'étape de formation de la couche à dilatation thermique (30),
une température de dilatation maximale (Tm2) du second matériau à dilatation thermique (33a) est plus élevée qu'une température de dilatation maximale (Tml) du premier matériau à dilatation thermique (32a), et
une température initiale de dilatation (Ts2) du second matériau à dilatation thermique (33a) est plus élevée qu'une température initiale de dilatation (Ts1) du premier matériau à dilatation thermique (32a).

8. Procédé de fabrication selon la revendication 7, dans lequel
une température initiale de dilatation (Ts2) du second matériau à dilatation thermique (33a) est plus basse que la température de dilatation maximale (Tml) du premier matériau à dilatation thermique (32a).

9. Procédé de fabrication selon la revendication 7 ou 8, dans lequel
une taille maximale de particule du second matériau à dilatation thermique (33a) est supérieure à une taille maximale de particule du premier matériau à dilatation thermique (32a).

10. Procédé de fabrication selon l'une quelconque des revendications 7 à 9, dans lequel
un rapport pondéral du second matériau à dilatation thermique (33a) au premier matériau à dilatation thermique (32a) vaut de 0,2 à 4, limites incluses.

11. Procédé de fabrication selon l'une quelconque des revendications 7 à 10, dans lequel
un rapport d'un total de quantités pondérales du premier matériau à dilatation thermique (32a) et du second matériau à dilatation thermique (33a) à une quantité pondérale du liant (31) vaut de 9:1 à 1:1.

12. Procédé de fabrication selon l'une quelconque des revendications 7 à 11, dans lequel
un rapport pondéral du liant (31) au premier matériau à dilatation thermique (32a) au second matériau à dilatation thermique (33a) est 2:1:1.

13. Procédé de fabrication destiné à la fabrication d'un objet formé (100) utilisant une feuille de moulage (10) incluant une base (20) et une couche à dilatation thermique (30) disposée sur une surface de la base (20), le procédé de fabrication comprenant :
une étape (S20) d'application d'une couche de conversion thermique (130) sur une surface de la feuille de moulage (10), pour la conversion d'ondes électromagnétiques en chaleur, and
une étape (S30) d'irradiation de la couche de conversion thermique (130) avec les ondes électromagnétiques afin de dilater la couche à dilatation thermique (30), **caractérisé en ce que**
la couche à dilatation thermique (30) comprend un premier matériau à dilatation thermique (32a) et un second matériau à dilatation thermique (33a) qui sont dispersés dans un liant (31),
une température de dilatation maximale (Tm2) du second matériau à dilatation thermique (33a) est plus élevée qu'une température de dilatation maximale (Tml) du premier matériau à dilatation thermique (32a), et
une température initiale de dilatation (Ts2) du second matériau à dilatation thermique (33a) est plus élevée qu'une température initiale de dilatation (Ts1) du premier matériau à dilatation thermique (32a).

14. Procédé de fabrication selon la revendication 13, dans lequel
une température initiale de dilatation (Ts2) du second matériau à dilatation thermique (33a) est plus basse que la température de dilatation maximale (Tml) du premier matériau à dilatation thermique (32a).

15. Procédé de fabrication selon la revendication 13 ou 14, dans lequel
une taille maximale de particule du second matériau à dilatation thermique (33a) est supérieure à une taille maximale de particule du premier matériau à dilatation thermique (32a).
